# EUROPEAN PATENT SPECIFICATION

(11) **EP 1 815 171 B1**
(45) Date of publication and mention of the grant of the patent: **12.01.2011**
(21) Application number: 05852136.0
(22) Date of filing: 22.11.2005
(51) Int. Cl.: F16K 13/02, F16K 5/04

(54) **PLUG VALVE WITH IMPROVED FLOW CAPACITY**
HAHNVENTIL MIT VERBESSERTER FLUSSKAPAZITÄT
ROBINET A TOURNANT A CAPACITE D'ECOULEMENT AMELIOREE

(30) Priority: 22.11.2004 US 993437
(43) Date of publication of application: 08.08.2007
(73) Proprietor: DeZURIK, Inc, Sartell, MN 56377 (US)
(72) Inventor: LIBKE, Albert, W., Rayalton, Minnesota 56373 (US); JANAGAN, Paranthaman, Fresno, California 93720 (US)
(74) Representative: Davies, Gregory Mark
(86) International application number: PCT/US2005/042625
(87) International publication number: WO 2006/055977

(56) References cited:
- WO-A-00/19133
- DE-U1- 20 104 883
- FR-A- 2 804 740
- US-A- 1 844 046
- PATENT ABSTRACTS OF JAPAN vol. 010, no. 211 (M-501), 24 July 1986 (1986-07-24) & JP 61 052469 A (TOMOE GIJUTSU KENKYUSHO:KK), 15 March 1986 (1986-03-15)

## Description

### FIELD OF THE INVENTION

The present invention relates generally to the field of eccentric plug valves which may be used to control the flow of fluid in pipe systems.

### BACKGROUND OF THE INVENTION

Eccentric plug valves have been available to industry for some time, and typically include a main body having an inlet port and outlet port and a plug mounted for rotation about a shaft, so that a plug face is eccentrically rotated to either close off or open flow through a valve seat area. Such valves are used, for example, in wastewater, mining, fresh water, and many other industrial and HVAC services.

The plug valves typically have a long service life and are known for their reliability. Many of the valves are sold for use in sludge and slurry services such as wastewater, ash, mining tailings, and other similar applications. Eccentric plug valves generally include two types: wherein the rotatable plug and mating seat is either cylindrical or spherical.

Cylindrical plugs are sometimes desirable and seal against a cylindrical seat around a seal seat area. When the valve is closed, a seal is created between the plug and a typically nickel seat. Oftentimes, the valves have a restriction in their internal flow when open, because due to internal configuration the flow area may for example be only approximately 80% of the internal pipe diameter flow area for which the valve is connected. The plugs are normally elastomer faced for tight fluid shutoff and for abrasion and erosion resistance. Valves are often provided with a standard "face to face" length conforming to US and ISO standards for plug valves.

Eccentric plug valves are quite versatile. In most liquid service for example, it is recommended that the valve be installed with the nickel seat in the downstream location of the valve. In the case of suspended solid service such as slurry and sludge, it is sometimes recommended that the valve be installed with the seat upstream and/or with shaft axis horizontal, such that the plug is raised above the pipe centreline when the valve is open. This assists with keeping the plug and bearings away from accumulated settled grit, fines and other debris that can accumulate in the bottom of a valve body.

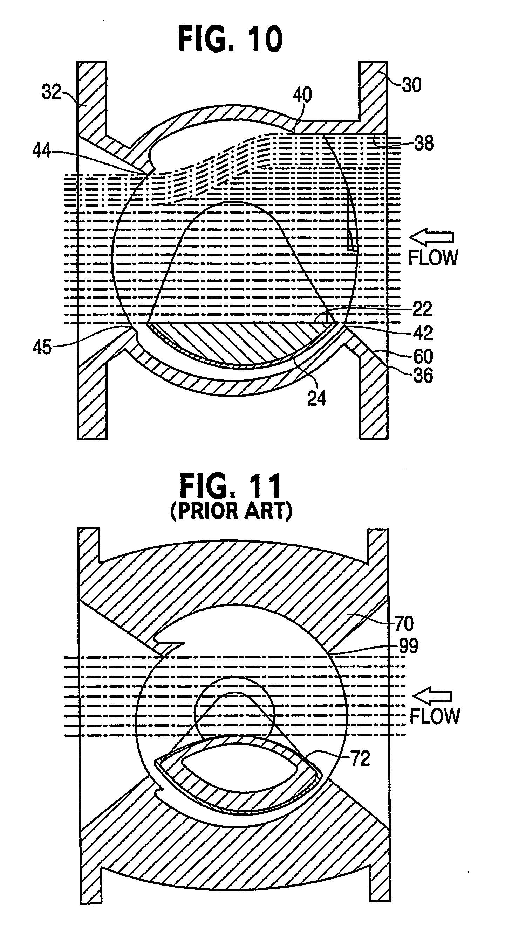

While the above valve designs are quite useful, available industrial plug valves valve designs, such as an example shown in FIG. 11, have typically had a restriction to the fluid flow that occurs due to restrictions in the flow area configuration, for example, the flow area is approximately 80% of the pipe area in some designs.

One solution to this has been to install an oversized valve, so that the port area will effectively be 100% of pipe inside flow area. However, this has the disadvantage that the oversized valve is heavy, expensive, and may require a larger actuator which may also be more expensive, as opposed to a more compact unit. Further, the oversized valves will be made will the smaller flange but will have an increased face to face area. This reduces interchangeability of the valves.

Another disadvantage of the known plug valves is that where they are installed in sludge or slurry service, the intersection of the cylindrically body wall with a point of a flat flange can sometimes form a partial wedge shaped dam that allows sediment and other debris to accumulate in the lower section of the valve as noted above.

WO0019133 describes a valve with an inlet and an outlet port and a cylindrical shutoff part which is rotatable along its longitudinal axis. The shutoff part can be rotated to prevent flow through the valve by shutting off the outlet port. A problem with such an arrangement is impaired flow through the valve which may result in debris buildup, therefore reducing fluid flow.

US 1844048 and JP vol. 101, no. 211 (M-501) describe arrangements having a valve body and a plug having cylindrically curved ceiling faces and substantially planar second faces opposite to the curved ceiling face which are arranged to rotate relative to the valve body thereby preventing flow through the valve.

DE20104883 describes a further arrangement whereby a plug is provided with a curved sealing face and a substantially planar second face arranged to rotate to seal a valve body. FR 2804740 describes a valve arrangement having a plug which also rotates to provide a seal for a valve arrangement.

Accordingly it would be desirable to have an improved plug valve with cylindrical seating that can at least to some degree enhance fluid flow and/or ameliorate the buildup effects of suspended solids use.

### SUMMARY OF THE INVENTION

The foregoing needs are met, to a great extent, by the present invention, wherein in one aspect an apparatus is provided that in some embodiments provides an improved plug valve with cylindrical seating that can at least to some degree enhance fluid flow and/or ameliorate the effect of suspended solids use.

According to the present invention there is an apparatus according to claim 1.

In one aspect, some embodiments of the invention provide a valve apparatus, comprising, housing means having an inlet port and an outlet port having a seat opening; and sealing means mounted in the housing means having a cylindrically curved sealing face, wherein the inlet part comprises an entry region having a change in outline shape but no change in total area.

There has thus been outlined, rather broadly, certain embodiments of the invention in order that the detailed description thereof herein may be better understood, and in order that the present contribution to the art may be better appreciated. There are, of course, additional embodiments of the invention that will be described below and which will form the subject matter of the claims appended hereto.

In this respect, before explaining at least one embodiment of the invention in detail, it is to be understood that the invention is not limited in its application to the details of construction and to the arrangements of the components set forth in the following description or illustrated in the drawings. The invention is capable of embodiments in addition to those described and of being practiced and carried out in various ways. Also, it is to be understood that the phraseology and terminology employed herein, as well as the abstract, are for the purpose of description and should not be regarded as limiting.

As such, those skilled in the art will appreciate that the conception upon which this disclosure is based may readily be utilized as a basis for the designing of other structures, methods and systems for carrying out the several purposes of the present invention.

### BRIEF DESCRIPTION OF THE DRAWINGS

FIG. 1 is a cross-sectional view of a plug valve according to a preferred embodiment of the invention, taken through line 1-1 in FIG. 2.

FIG. 2 is a top view of a plug valve according to a preferred embodiment of the invention.

FIG. 3 is a side view of a valve plug used in the embodiment of FIG. 1.

FIG. 4 is a cross-sectional view taking through line 4--4 in FIG. 3.

FIG. 5 is a cut away perspective view of an embodiment of the plug valve.

FIG. 6 is a cut away top view of the valve of FIG. 5 shown in an open position

FIG. 7 is a cut away top view of the valve of FIG. 5 shown in a closed position.

FIG. 8 is a perspective view of a valve body used in the embodiment of FIG. 1.

FIG. 9 is a cross-sectional view of the valve body shown FIG. 8, taken through line 9--9.

FIG. 10 is a symmetric cross-sectional diagram showing a flow path of fluid through a valve according to a preferred embodiment with the valve in an open position.

FIG. 11 is a symmetric cross-sectional diagram showing a flow path of fluid through a prior art valve arrangement with this valve in an open position.

FIG. 12 is a diagram similar to FIG. 10, but showing the valve installed in a reverse orientation.

FIG. 13 is a diagram similar to FIG. 11, but showing the valve installed in a reverse orientation

### DETAILED DESCRIPTION

The present invention in some embodiments provides an improved plug valve and flow control method with cylindrical seating that can at least to some degree enhance fluid flow and/or ameliorate the effect of suspended solids use. A preferred embodiment will now be described with reference to the drawing figures, in which like reference numerals refer to like parts throughout.

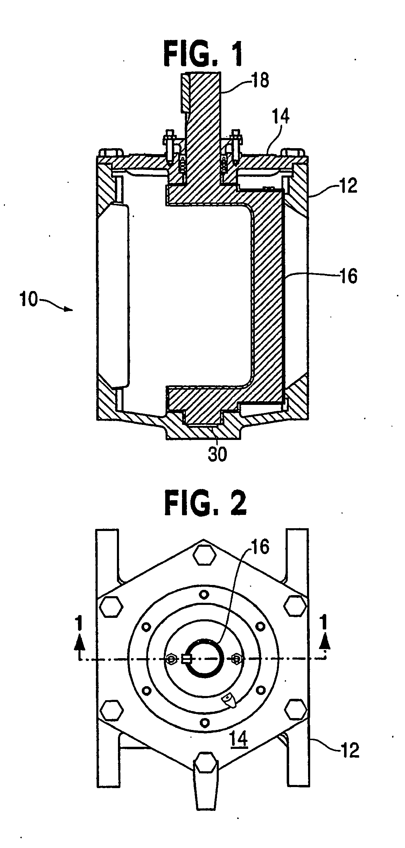

FIG. 1 illustrates a plug valve 10 according to a preferred embodiment of the invention, including a body 12, a bonnet 14, and a valve plug 16. The valve plug 16 is rotatably mounted within the chamber formed by the housing 12 and the bonnet 14 and is moveable between open and closed positions as will be described in more detail below. FIG. 2 is a top view of the arrangement shown in FIG. 1 and further illustrates the housing 12, bonnet 14 and a shaft portion of the valve plug 16.

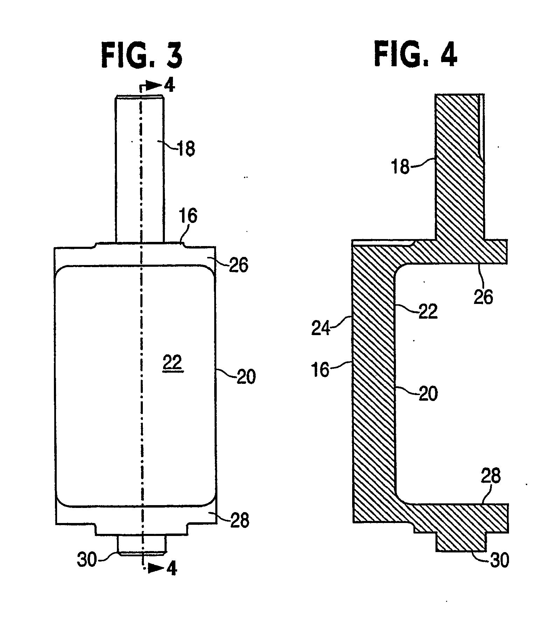

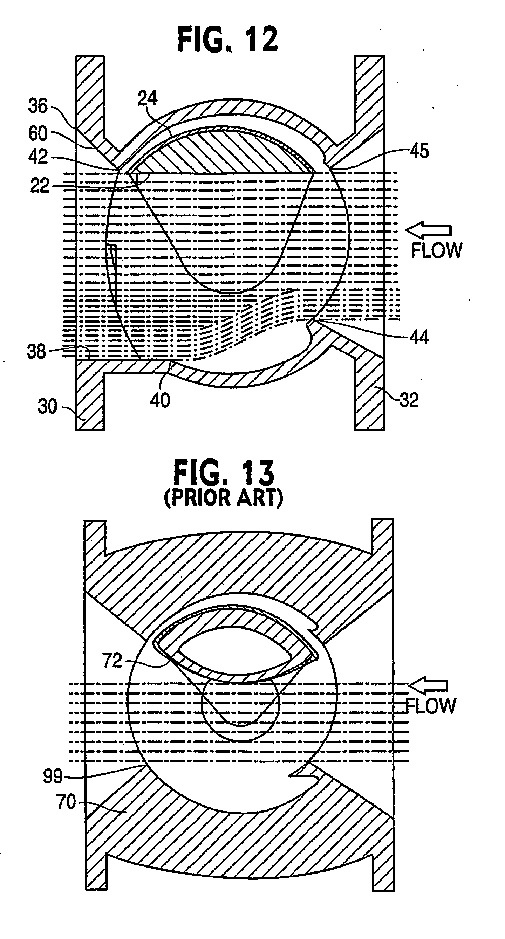

Turning now to FIGS. 3 and 4 in particular, the valve plug 16 is illustrated to have the shaft 18, a plug region 20 having a back face 22 and a front sealing face 24, and upper and lower connecting regions 26 and 28. A lower shaft 30 is also mounted by a bushing for rotation with respect to the body 12 and the shaft 18 is mounted for rotation with respect to the bonnet 14. Thus, the plug 16 is mounted for rotation about an axis of rotation that is a longitudinal axis through shafts 18 and 30. Although the preferred embodiment is shown with a unitary plug having integral top and bottom shafts, in other embodiments a separate top and/or bottom shaft can be attached to the shaft, for example by being pinned t o the plug. The direction parallel to the axis of rotation is referred to herein as "vertical" in order to provide a useful reference coordinate herein. Other directions and orientations will be described as vertical herein, meaning they are parallel to this axis. However, it is to be understood that the valve may actually be installed in any orientation, including an orientation where the rotational axis is horizontal relative to the direction of gravity, and in such case, the reference to vertical herein refers to parallelism with this rotational axis, and not necessarily to the direction of gravity. Also, although FIGS. 1-10 show flow in one direction from an inlet to outlet, it will be appreciated that in some installations the orientation of the valve are reversed so that the "inlet" and "outlet" sides are reversed. This type of installation, for example of which is shown in FIG. 12, is typically intended for installations high in sludge and/or particulates.

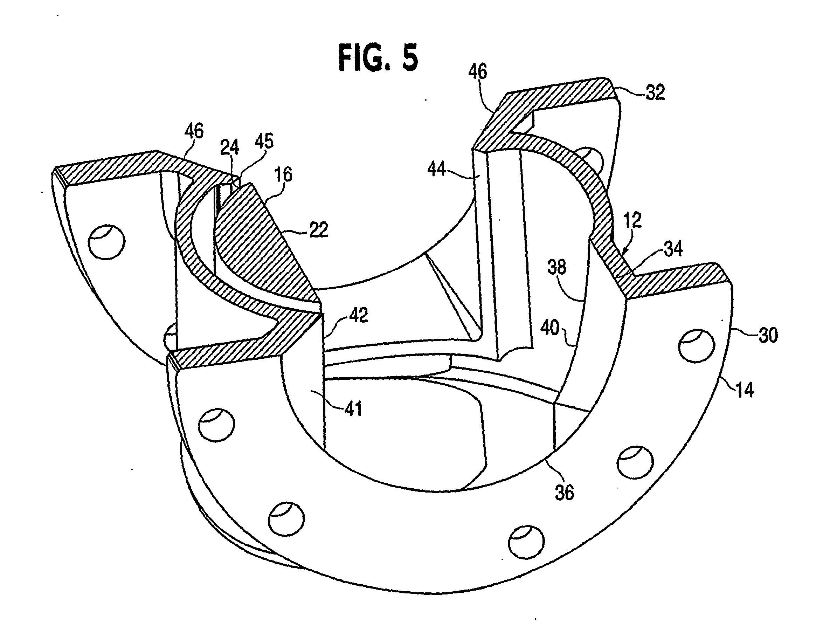

Turning to FIG. 5, additional features of the valve plug 16 and body 12 are illustrated. FIG. 5 illustrates that the rear face 22 of the valve plug 16 has a substantially flat or planar profile as shown, while the outer face 24 has a cylindrical profile shape. The body 12 includes an inlet flange 30 and an outlet flange 32. The inlet flange 30 leads to an inlet flow path area 34 which transitions from a circular opening 36 to a slightly narrower curved side entry transition region leading to a rear edge 40, and opposite arranged to a tapered side 41 heaving a relatively straight vertical corner inlet edge 42.

When the valve 10 is in the open position shown in FIG. 5, the flat surface 22 of the valve plug 16 is substantially aligned with edge 42. A cylindrical rectangular valve seat area 44 is provided against which the outer surface 44 of the valve plug 16 engages when the valve 10 is in a closed position, as will be described in further detail below. Behind the seat 44, the flow path generally expands due to diverging tapered surfaces 46 leading to the end of the outlet flange 32.

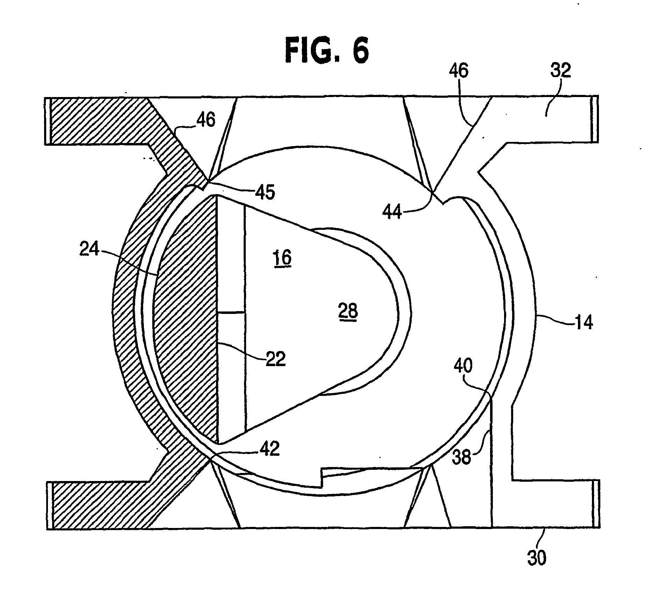

The valve 10 is shown in an open position in FIG. 6. The body 14 includes the front flange 30, and the curved sidewall 38 leading to a rear side edge 40. The other rear vertical side edge 42 is also shown and it is in substantial alignment with the rear surface 22 of the plug 16. Also shown is the outer sealing face 24 of the plug 16 and the overall seat 44, as well as diverging tapered surfaces 46.

It will be appreciated that the generally cylindrical rectangular outline of the seat 44 has a vertical left edge 45 that is generally aligned with and does not project beyond the plane formed by the vertical inside surface 24 of the plug 16. Thus, FIG. 6 illustrates a generally planar relationship between the vertical inlet edge 42, the vertical seat edge 45, and the rear or inside face 22 of the plug 28.

As will be discussed in more detail below, it will be appreciated that this provides a smooth and uninterrupted flow boundary along the plane shown in the left side of the flow area of the arrangement of FIG. 6. Further, on the regions to the right side of FIG. 6, the relatively straight vertical edge 40 and its smooth transition contour at the cylindrical gradual transition entry region 38 will provide for a fairly straight and wide flow path.

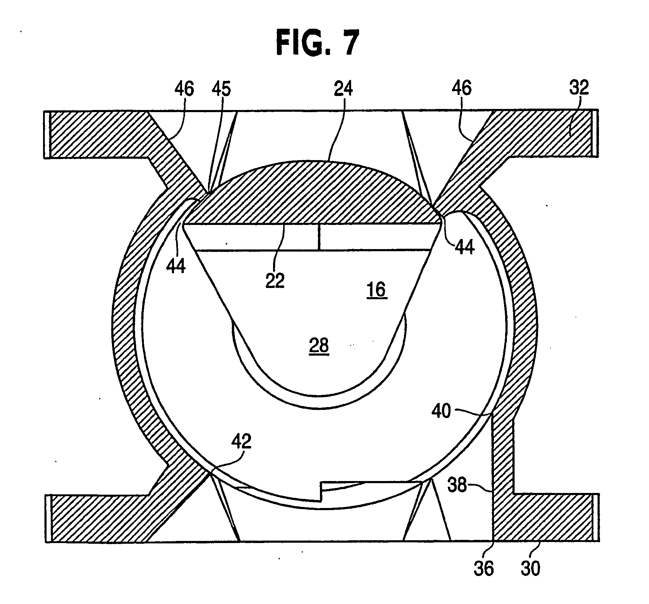

FIG. 7 shows the valve 10 in a closed position. The outer surface 24 of the valve plug 16 is in contact with the seat 44 to perform the intended shutoff of fluid flow.

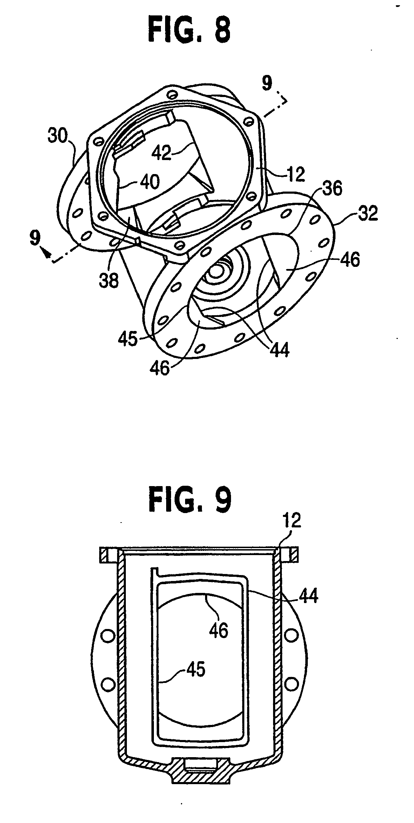

FIGS. 8 and 9 are perspective and cross sectional views of the valve body 12. In FIG. 8, inside of the inlet flange 30 can be seen the vertical inlet edge 42 as well as the more rounded extended inlet edge 40 defined by the gradual transition region 38. Near the outlet flange 32 can be seen the vertical edges of the seat 44 and the transition region 46.

The cross sectional view of FIG. 9 further shows on the inlet side, the rectangular cylindrical outline of the seat 44 and its left edge 45, as well as the circular outlet region 46.

FIG. 10 is a simplified schematic flow diagram which illustrates some of the benefits achieved by various aspects of various embodiments of the present invention. For example, the flat surface 22 of the rear of the valve plug 16 and its alignment with the vertical flow boundary edge 42 and the vertical edge 45 of the seat 44 provide a smooth fluid flow through the valves 10. Further, the relatively straight vertical edge 40 and the smooth entry region 38 also permits an uninterrupted smooth fluid flow at that area.

While it may appear from the cross section of FIG. 10 that the volumetric flow area at the front inlet face of the flange 30 is larger than the volumetric flow area taken at the vertical edge 40, this does not have to be the case because during the transition from the front opening 36 to the vertical edge 40, a change in the vertical height the flow cross-sectional area can also be occurring. Therefore, the two dimensional flow area at front face edge 36 and at the vertical edge 40 can be made the same as each other, and further can be made 100% the inner diameter area of the pipe to which the valve is connected if that is so desired. Also, the two dimensional flow area at the seat 44 can be made equal to the inner diameter area of the pipe

FIG. 10 also contrasts this particular embodiment of the invention with a prior art arrangement as shown in FIG. 11. Some differences that are illustrated include, for example, that a constricting wedge area 70 shown in FIG. 11 is not present in FIG. 10, which instead shows a smooth entry region 38. Also shown in FIG. 11 is a convex rear surface 72 of the plug, which can undesirably restrict the free flow area compared to the flar rear surface 22 of this embodiment of FIG. 10.

FIG. 12 shows the valve 10 with the flow direction reversed and in a horizontal position. This installation may be preferred for example in applications high in sludge and/or particulates. It will be seen that the smooth transition region 38 allows sediment to be carried out and not form a dam as would occur at location 99 of the prior art shown in FIG. 13 (wherein the valve of FIG. 11 installed upside down and backwards).

The many features and advantages of the invention are apparent from the detailed specification, and thus, it is intended by the appended claims to cover all such features and advantages of the invention which fall within the true spirit and scope of the invention. Further, since numerous modifications and variations will readily occur to those skilled in the art, it is not desired to limit the invention to the exact construction and operation illustrated and described, and accordingly, all suitable modifications and equivalents may be resorted to, falling within the scope of the invention.

## Claims

1. A valve apparatus, comprising a housing means (12) having an inlet port and an outlet port having a seat; the ports defining an inlet flow path (34) and an outlet flow path (46), the housing means (12) further having a sealing member (16) rotatably mounted around a longitudinal axis within the housing means (12) between an open position and a closed position, the sealing member (16) has a first cylindrically curved face (24) opposing the curved interior surface of the housing means and a second substantially planar face (22) opposite the first curved face (24), **characterized in that**
the inlet flow path (34) of the housing means (12) includes a transition region from a circular opening (36) to an opening defined by a rear edge (40) opposed by a relatively straight corner inlet edge (42) and the outlet flow path comprises a substantially straight edge (45) of the seat (44) parallel to the corner inlet edge (42), wherein the second planar face (22) of the sealing member (16) is aligned with the corner inlet edge (42) and the edge (45) of the seat (44) of the housing (12) when in an open position.

2. The valve apparatus of claim 1, wherein the transition region of the inlet flow path (34) includes a sidewall (38) that transitions from a curved profile to corner inlet edge (42).

3. The valve apparatus of claim 2 wherein the corner inlet edge (42) is parallel to the longitudinal axis of rotation.

4. The valve apparatus of claim 1, wherein the outlet flow path of the housing (12) includes diverging tapered surfaces.

5. The valve apparatus of claim 1, wherein the inlet flow path has a volumetric flow area that remains substantially constant.

6. The valve apparatus of claim 5, wherein the vertical height of the inlet flow path changes within the transition region.

7. The valve apparatus of claim 1, wherein the valve apparatus is operably connected to a pipe having a pipe volumetric flow area and the inlet flow path has a volumetric flow area that is substantially equal to the pipe volumetric flow area.

## Patentansprüche

1. Ventilsystem, umfassend ein Gehäuse (12) mit einer Einlaßöffnung und einer Auslaßöffnung mit einem Sitz, wobei die Öffnungen einen Einlaßfließpfad (34) und einen Auslaßfließpfad (46) definieren, wobei das Gehäuse (12) außerdem ein Dichtungselement (16) aufweist, welches um eine Längsachse innerhalb des Gehäuses zwischen einer offenen Position und einer geschlossenen Position rotierbar gelagert ist, wobei das Dichtungselement (16) eine erste, der gekrümmten inneren Oberfläche des Gehäuses gegenüberliegende, zylinderförmig gekrümmte Fläche (24) und eine zweite, im wesentlichen ebene, der ersten gekrümmten Fläche (24) gegenüberliegende Fläche (22) aufweist, **dadurch gekennzeichnet, daß** der Einlaßfließpfad (34) des Gehäuses (12) einen Übergangsbereich von einer kreisförmigen Öffnung (36) zu einer Öffnung, die durch eine rückwärtige Kante (40), der eine relativ gerade Ecken-Einlaßkante (42) gegenüberliegt, definiert wird, einschließt, und daß der Ausgangsfließpfad eine im wesentlichen gerade Kante (45) des Sitzes (44) parallel zur Ecken-Einlaßkante (42) umfaßt, wobei die zweite, ebene Fläche (22) des Dichtungselements (16) mit der Ecken-Einlaßkante (42) und der Kante (45) des Sitzes (44) des Gehäuses (12) gefluchtet ist, wenn sich das Ventilsystem in einer offenen Position befindet.

2. Ventilsystem nach Anspruch 1, wobei der Übergangsbereich des Einlaßfließpfades (34) eine Seitenwand (38) einschließt, die von einem gekrümmten Profil zur Ecken-Einlaßkante (42) übergeht.

3. Ventilsystem nach Anspruch 2, wobei die Ecken-Einlaßkante (42) parallel zur longitudinalen Rotationsachse ist.

4. Ventilsystem nach Anspruch 1, wobei der Auslaßfließpfad des Gehäuses (12) schräg auseinanderlaufende Flächen umfaßt.

5. Ventilsystem nach Anspruch 1, wobei der Einlaßfließpfad einen volumetrischen Durchflußbereich aufweist, der im wesentlichen konstant bleibt.

6. Ventilsystem nach Anspruch 5, wobei sich die vertikale Höhe des Einlaßfließpfades innerhalb des Übergangsbereichs ändert.

7. Ventilsystem nach Anspruch 1, wobei das Ventilsystem betriebsfähig mit einem Rohr verbunden ist, welches einen volumetrischen Rohr-Durchflußbereich aufweist, und der Einlaßfließpfad einen volumetrischen Durchflußbereich aufweist, der im wesentlichen gleich dem volumetrischen Rohr-Durchflußbereich ist.

## Revendications

1. Appareil formant robinet, comprenant des moyens de boîtier (12) ayant un orifice d'entrée et un orifice de sortie ayant un siège ; les orifices définissant une trajectoire de flux d'entrée (34) et une trajectoire de flux de sortie (46), les moyens de boîtier (12) ayant en outre un élément d'étanchéité (16) monté de manière rotative autour d'un axe longitudinal à l'intérieur des moyens de boîtier (12) entre une position ouverte et une position fermée, l'élément d'étanchéité (16) a une première face cylindriquement incurvée (24) opposée à la surface intérieure incurvée des moyens de boîtier et une deuxième face sensiblement plane (22) opposée à la première face incurvée (24), **caractérisé en ce que** :
la trajectoire de flux d'entrée (34) des moyens de boîtier (12) comprend une région de transition à partir d'une ouverture circulaire (36) jusqu'à une ouverture définie par un bord arrière (40) opposé par un bord d'entrée angulaire relativement droit (42) et la trajectoire de flux de sortie comprend un bord sensiblement droit (45) du siège (44) parallèle au bord d'entrée angulaire (42), dans lequel la deuxième face plane (22) de l'élément d'étanchéité (16) est alignée avec le bord d'entrée angulaire (42) et le bord (45) du siège (44) du boîtier (12) lorsqu'il est dans une position ouverte.

2. Appareil formant robinet selon la revendication 1, dans lequel la région de transition de la trajectoire de flux d'entrée (34) comprend une paroi latérale (38) qui passe d'un profil incurvé à un bord d'entrée angulaire (42).

3. Appareil formant robinet selon la revendication 2, dans lequel le bord d'entrée angulaire (42) est parallèle à l'axe longitudinal de rotation.

4. Appareil formant robinet selon la revendication 1, dans lequel la trajectoire de flux de sortie du boîtier (12) comprend des surfaces progressivement rétrécies divergentes.

5. Appareil formant robinet selon la revendication 1, dans lequel la trajectoire de flux d'entrée a une zone de flux volumétrique qui reste sensiblement constante.

6. Appareil formant robinet selon la revendication 5, dans lequel la hauteur verticale de la trajectoire de flux d'entrée change dans la région de transition.

7. Appareil formant robinet selon la revendication 1, dans lequel l'appareil formant robinet est raccordé de manière opérationnelle à un tuyau ayant une zone de flux volumétrique de tuyau et la trajectoire de flux d'entrée a une zone de flux volumétrique qui est sensiblement égale à la zone de flux volumétrique de tuyau.
